# EUROPÄISCHE PATENTSCHRIFT

(11) **EP 2 511 067 B1**
(45) Veröffentlichungstag und Bekanntmachung des Hinweises auf die Patenterteilung: **10.09.2014**
(21) Anmeldenummer: 12160854.1
(22) Anmeldetag: 22.03.2012
(51) Int. Cl.: B29C 45/72

(54) **Kühlhülse mit Stützelement**
Cooling sleeve with support element
Chemise de refroidissement avec élément d'appui

(30) Priorität: 15.04.2011 DE 102011007553
(43) Veröffentlichungstag der Anmeldung: 17.10.2012
(73) Patentinhaber: MHT Mold & Hotrunner Technology AG, 65239 Hochheim (DE)
(72) Erfinder: Thömmes, Helmut, 54441 Kastel-Staadt (DE)
(74) Vertreter: WSL Patentanwälte Partnerschaft mbB

(56) Entgegenhaltungen:
- WO-A1-97/47459
- WO-A1-2006/094379
- WO-A1-2007/063063

## Beschreibung

Die vorliegende Erfindung betrifft einen Kühlhülse zur Aufnahme eines mittels Spritzgießen hergestelltem Vorformlings.

Das Spritzgießen ist eines der wichtigsten Verfahren zur Herstellung von Formlingen bzw. Formteilen. Hierbei wird die im Allgemeinen ursprünglich als Pulver oder Granulat vorliegende Formmasse erhitzt, plastifiziert und unter hohem Druck in ein entsprechendes Formwerkzeug gedrückt. Die Formmasse erstarrt in dem Formwerkzeug und wird anschließend dem geöffneten Werkzeug entnommen.

Handelsübliche PET-Flaschen werden im Allgemeinen durch Streckblasformen eines Hohlkörpervorformling hergestellt. Dabei wird der Hohlkörpervorformling in einem ersten Schritt mittels Spritzgießen erstellt. Das sich an den Spritzgießvorgang anschließende Streckblasformen kann entweder unmittelbar nach Herstellung des Hohlkörpervorformlings oder zu einem späteren Zeitpunkt erfolgen.

Bei der Herstellung der entsprechenden Spritzgießformen ist ein hoher Aufwand von Nöten, wobei die Spritzgießform einerseits für sehr hohe Drücke ausgelegt sein muss und andererseits auch entsprechend beheizte und/oder gekühlte Kanäle aufweisen muss.

Üblicherweise besteht ein Spritzgießwerkzeug zur Herstellung von PET-Vorformlingen aus einer Vielzahl, z. B. 192, Kavitäten, in die entsprechend ausgebildete Werkzeugkerne eingeführt werden. Bei geschlossenem Werkzeug, d. h., wenn der Kern in die entsprechende Kavität eingesetzt ist, wird zwischen dem Kern einerseits und der Kavität andererseits ein Raum, der sogenannte Formraum, gebildet. In diesem Raum wird dann der plastifizierte Kunststoff, z. B. PET, unter hohem Druck eingespritzt. Sobald der PET-Vorformling genügend abgekühlt ist, kann die Form geöffnet und der Vorformling entnommen werden. Die PET-Vorformlinge weisen ein offenes Ende, an dem ein Außengewinde ausgebildet ist, und ein geschlossenes Ende auf. In der Regel erfolgt die Zuführung der plastifizierten Schmelze über einen Anguß, der an der Außenseite des geschlossenen Endes des Vorformlings angeordnet ist. Herstellungsbedingt verbleibt daher an der Außenseite des Vorformling im Bodenbereich ein im wesentlichen scheibenförmiger Anguss.

Um die Zykluszeiten, d. h. die Zeit von einem Spritzvorgang bis zu dem nächsten Spritzvorgang, zu reduzieren, ist es bereits üblich, den Preform zu einem sehr frühen Zeitpunkt aus der Form zu entnehmen, zu dem der Preform an seinen Außenflächen bereits fest ist, dessen innerer Bereich, die sogenannte Seele, jedoch noch flüssig ist. In diesem Zustand wird der Vorformling im Allgemeinen in eine sogenannte Aufnahmeplatte übergeben, die aus einer Gruppe von Kühlhülsen mit Aufnahmekavitäten besteht. So ist es beispielsweise bei den sogenannten Horizontalwerkzeugen, d. h. denjenigen Spritzgießwerkzeugen, die sich durch eine horizontale Bewegung des einen Werkzeugteils gegenüber dem anderen öffnen, üblich, die Werkzeugform bereits nach z. B. acht Sekunden zu öffnen, eine Aufnahmeplatte mit entsprechenden Kühlhülsen in die Form einzufahren, die einzelnen Preformen in die Kühlhülse zu übergeben, die Aufnahmeplatte mit den Preforms aus dem Werkzeug herauszufahren, die Form wieder zu schließen und den nächsten Spritzgießvorgang zu beginnen. Während des nächsten Spritzgießvorgangs verbleiben die vorherigen Vorformlinge in den Kühlhülsen, die üblicherweise gekühlt werden.

Die Kühlhülse weisen Aufnahmekavitäten mit einem offenen und einem geschlossenen Ende auf, deren innere Form im Wesentlichen der äußeren Form des Vorfomlings entspricht. Um sicher zu stellen, dass der Vorformling vollständig in der Aufnahmekavität aufgenommen wird, weisen diese in der Regel einen Fluidkanal auf, der derart angeordnet ist, dass ein Fluid, in der Regel Luft, bei verschlossener Aufnahmeöffnung, d. h. beispielsweise bei in die Aufnahmeöffnung eingesetztem Vorformling, über den Fluidkanal in die Aufnahmekavität eingebracht oder aus der Aufnahmekavität entnommen werden kann. In der Regel befindet sich der Fluidkanal am geschlossenen Ende der Aufnahmekavität im Bereich der zentralen Längsachse der Kühlhülse. Über diesen Fluidkanal kann entweder die Luft abgesaugt werden, um den in die Aufnahmeöffnung eingesetzten Vorformling vollständig in die Aufnahmekavität hineinzusaugen und zu halten, oder es kann über den Fluidkanal Luft in die Aufnahmekavität eingebracht werden, um nach erfolgter Abkühlung des Vorformlings diesen aus der Aufnahmekavität herauszutreiben.

Da der Fluidkanal eine Kanalöffnung aufweist, die auf der Längsachse angeordnet ist, führt dies dazu, dass bei in die Aufnahmekavität eingesetztem Vorformling der Vorformling im Bereich der Kanalöffnung, d. h. in seinem Bodenbereich keinen direkten Kontakt zur Aufnahmekavität hat, was zur Folge hat, dass dieser Bereich deutlich schlechter gekühlt wird als die Bereiche, die direkten Kontakt mit der Aufnahmekavität haben.

Da jedoch bei der Herstellung der PET-Vorformlingen der Anguss an der Außenseite des Vorformlings am Boden angeordnet ist, ist der Vorformling aufgrund des Angusses exakt an der Stelle, an der er keinen direkten Kontakt mit der Aufnahmekavität hat, etwas dicker als die anderen Abschnitte. Der Anguss ist nach der Entnahme aus der Spritzgießform der heißeste Punkt des Vorformlings, da hier zuletzt heiße Schmelze am Ende eines Nachdruckschritts zugeführt wurde.

Daher weist ausgerechnet der heißeste Abschnitt, der zugleich etwas dicker ausgebildet ist und daher stärker gekühlt werden müsste, bei den bekannten Ausführungsformen die geringste Kühlung auf, sodass die Abkühlung des Bodenbereiches, insbesondere im Bereich des Anguss, der den Kühlzyklus limitierende Faktor sein kann. Zudem kann es, wenn der Vorformling bei der Übergabe noch sehr weich ist, zu einer Verformung des Angusses kommen, wenn Luft über den Fluidkanal evakuiert wird.

Insbesondere, wenn über den Fluidkanal Luft abgesaugt wird, kann an der Außenseite des Vorformlings ein Teil des noch flüssigen PETs in die Kanalöffnung des Fluidkanals hereingesaugt werden, sobald der Vorformling die Kanalöffnung abdeckt, so dass sich wurzeiförmige .Nasen", sogenannte "Carrots", bilden, die zu einer optischen Beeinträchtigung der mittels Streckblasen hergestellten PET-Flasche führen.

Um die Kühlzykluszeit zu verringern, ist daher bereits versucht worden, den Fluidkanal dezentral anzuordnen, so dass er nicht im Bereich des Angusses endet. Doch auch hier kommt es an der Außenseite des Vorformlings zu Markierungen, die durch die Öffnung des Fluidkanals hervorgerufen werden. Solche Markierungen sind jedoch unerwünscht.

Die WO 2006/094379 zeigt eine Kühlhülse, in deren Bodenabschnitt ein Kanal angeordnet ist, welcher mit einem Verschlusselement verschlossen werden kann.

Ausgehend von dem beschriebenen Stand der Technik ist es daher Aufgabe der vorliegenden Erfindung, eine Kühlhülse bereitzustellen, die eine beschleunigte Kühlung des Angussbereiches des Vorformlings erlaubt, ohne dass sich an der Außenseite des Vorformlings entsprechende Nasen oder Markierungen bilden.

Erfindungsgemäß wird diese Aufgabe durch eine Kühlhülse gemäß Anspruch 1 gelöst.

Dadurch, dass in der Kanalöffnung nun eine direkt mit dem Angussbereich des Vorformlings in Kontakt stehende Stützfläche bereitgestellt wird, kann der Angussbereich deutlich stärker gekühlt werden.

in einer Ausführungsform weist das Stützelement ein Umlenkelement für das Fluid auf, welches derart ausgebildet ist, dass Fluid, welches an der der Stützfläche abgewandten Seite im Wesentlichen entlang der Längsachse auf das Umlenkelement strömt, radial nach außen um die Stütz fläche herum geleitet wird. Dadurch, dass der Vorformling im Bereich des Angusses eine größere Wanddicke hat, bildet sich, selbst wenn der Vorformling vollständig in der Kühlhülse aufgenommen ist, in einem Bereich, der den Anguss umgibt, ein kleiner Spalt zwischen Vorformling und Kühlhülse. Am besten wird das Fluid über diesen Spalt zu- oder abgeführt, um die Nasenbildung zu vermeiden.

Obgleich daher die Stützfläche in direktem Kontakt mit dem Vorformling ist, ist dennoch sichergestellt, dass das Fluid um das Stützelement herum oder durch dieses hindurch strömen kann, um eine sichere Aufnahme des Vorformlings in der Aufnahmekavität und eine zuverlässige Abgabe des Vorformlings aus der Aufnahmekavität zu gewährleisten.

Grundsätzlich wäre es auch denkbar, das Stützelement und insbesondere die Stützfläche aus einem porösen Material zu fertigen, sodass das Stützelement sowohl für einen guten thermischen Kontakt mit dem Vorformling vorgesehen ist als auch der Zu- und Abführung des Fluids dient.

Um eine optimale Abstützung und Kühlung der Angussfläche des Vorformlings zu erzielen, ist die Stützfläche am besten derart angeordnet, dass die Längsachse der Kühlhülse durch die Stützfläche verläuft.

In einer besonders bevorzugten Ausführungsform ist das Stützelement im Wesentlichen scheibenförmig mit einer ersten Fläche, die die Stützfläche aufweist, einer zweiten Fläche, die der ersten Fläche gegenüber angeordnet ist, und einer Umfangsfläche, die die erste und die zweite Fläche miteinander verbindet, ausgebildet. Am besten weist die Scheibe mindestens eine außerzentrische Durchgangsöffnung, welche die erste und die zweite Fläche miteinander verbindet und/oder mindestens eine in axialer Richtung in der Umfangsfläche verlaufende Nut auf. Durch eine oder mehrere Durchgangsöffnungen kann dann das Fluid aus der Aufnahmekavität abgezogen oder in diese eingebracht werden, ohne dass der Kühleffekt von der Angussfläche reduziert wird. In gleicher Weise wirken die in axialer Richtung in der Umfangsfläche verlaufenden Nuten. Das scheibenförmige Stützelement kann beispielsweise in den Fluidkanal mit kreisförmigem Querschnitt eingelegt werden.

Mit Vorteil ist der Fluidkanal gestuft ausgebildet mit einem Abschnitt mit größerem Querschnitt und einem Abschnitt mit kleinerem Querschnitt, wobei der Abschnitt mit kleinerem Querschnitt in die Aufnahmekavität mündet und das Stützelement in dem Abschnitt mit größerem Querschnitt angeordnet ist.

Durch diese Ausbildung kann ein guter Kontakt zwischen Stützelement einerseits und Kühlhülse andererseits gewährleistet werden, sodass das Stützelement über die Kühlhülse gekühlt wird, was zu einer effektiven Kühlung des Angussabschnittes des Vorformlings führt.

Weiterhin ist es von Vorteil, wenn der Abschnitt mit größerem Querschnitt ein Innengewinde aufweist und eine Gewindehülse mit Außengewinde vorgesehen ist, die in den Abschnitt mit größerem Querschnitt eingeschraubt werden kann, sodass das Stützelement zwischen dem Abschnitt mit kleinerem Querschnitt und der Gewindehülse angeordnet ist.

In einer weiteren bevorzugten Ausführungsform ist das Stützelement beweglich ausgebildet, sodass es zwischen einer Stützposition, in der das Stützelement in der Kanalöffnung angeordnet ist, und einer Auswurfposition, in der das Stützelement zumindest teilweise innerhalb der Aufnahmekavität angeordnet ist, hin und her bewegbar ist. Bei dieser Ausführungsform kann das Stützelement gleichzeitig zur Unterstützung des Auswurfschrittes nach erfolgter Abkühlung des Vorformlings innerhalb der Aufnahmekavität dienen. Gegebenenfalls kann dann sogar auf die Zugabe von Druckluft über den Fluidkanal verzichtet werden.

In einer weiteren bevorzugten Ausführungsform ist vorgesehen, dass das Stützelement mit Hilfe eines elastischen Elements in Richtung der Aufnahmekavität vorgespannt ist. Dadurch ist sichergestellt, dass das Stützelement in einem guten Kontakt mit dem Angussbereich des Vorformlings steht.

Erfindungsgemäß wird die Kühlhülse zusammen mit einem Spritzgießwerkzeug zur Herstellung von Vorformlingen mit mindestens einem Kern und mindestens einer Kavität verwendet, wobei das Werkzeug eine geschlossene Position, in der der Kern in der Kavität angeordnet ist, und eine offene Position, in der der Kern außerhalb der Kavität angeordnet ist, aufweist. Dann wird in der geschlossenen Position zwischen dem Kern einerseits und der Kavität andererseits ein Formraum gebildet, dessen Innenkontur der äußeren Form des herzustellenden Vorformlings entspricht, wobei ein Angusskanal mit einer Mündungsöffnung in dem Formraum vorgesehen ist, über den plastifizierte Schmelze in den Formraum zugeführt werden kann. Mit Vorteil ist die Kanalöffnung des Fluidkanals der Kühlhülse größer als die Mündungsöffnung des Angusskanals. Dies hat zur Folge, dass der Anguss des Vorformlings die Kanalöffnung des Fluidkanals nicht verschließt, sodass der Fluid seitlich an dem Angussbereich des Vorformlings zugeführt beziehungsweise abgesaugt werden kann.

Alternativ oder in Kombination dazu kann die Stützfläche des Stützelementes der Kühlhülse kleiner als die Mündungsöffnung des Angusskanals ausgebildet sein. In dem Fall liegt nicht der komplette Angussbereich des Vorformlings auf der Stützfläche des Stützelementes auf.

Weitere Vorteile, Merkmale und Anwendungsmöglichkeiten der vorliegenden Erfindung werden deutlich anhand der folgenden Beschreibung zweier Ausführungsformen und der dazugehörigen Figuren. Es zeigen:
Figur 1 eine Schnittansicht durch eine erste Ausführungsform der Erfindung mit eingesetztem Vorformling,
Figuren 2a und 2b eine perspektivische Ansicht und eine Schnittansicht durch das erfindungsgemäße Stützelement der ersten Ausführungsform,
Figuren 3a und 3b eine perspektivische Ansicht und eine Schnittansicht durch die Gewindehülse der ersten Ausführungsform,
Figur 4 eine Schnittansicht durch eine zweite Ausführungsform der Erfindung mit eingesetztem Vorformling,
Figuren 5a bis 5d eine perspektivische Ansicht, eine Draufsicht sowie zwei Schnittansichten der erfindungsgemäßen Hohlschraube der zweiten Ausführungsform der Erfindung,
Figur 6 eine Schnittansicht einer dritten Ausführungsform der Erfindung mit eingesetztem Vorformling,
Figur 7 eine Schnittansicht einer vierten Ausführungsform der Erfindung mit eingesetztem Vorformling,
Figuren 8a bis 8c eine Draufsicht, eine Schnittansicht sowie eine perspektivische Ansicht des Stützelementes der vierten Ausführungsform der Erfindung,
Figur 9 eine Schnittansicht einer fünften Ausführungsform der Erfindung mit eingesetztem Vorformling,
Figuren 10a bis 10c eine perspektivische Ansicht, eine Draufsicht und eine Schnittansicht des Stützelementes der fünften Ausführungsform der Erfindung und
Figuren 11a bis 11c zwei Draufsichten und eine perspektivische Ansicht eines Stützelementes einer sechsten Ausführungsform der Erfindung.

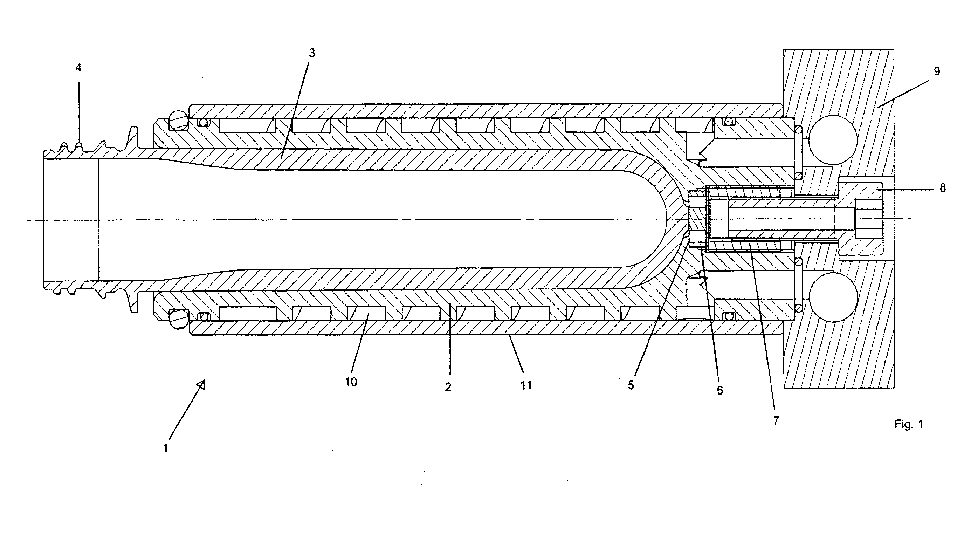

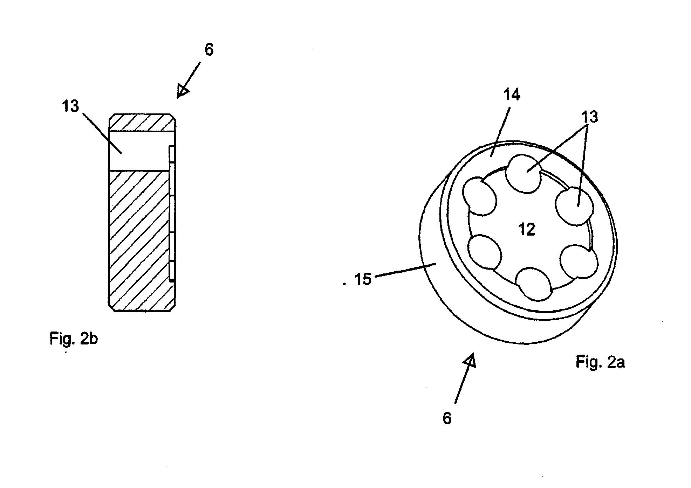

In Figur 1 ist eine erste Ausführungsform der erfindungsgemäßen Kühlhülse 1 dargestellt. Die Kühlhülse 1 weist einen äußeren Mantel 11 sowie ein Innenteil 2 auf, wobei das Innenteil 2 eine umlaufende Nut an der Außenseite aufweist, sodass sich zwischen äußerem Mantel 11 und Innenteil 2 ein Kühlkanal 10 ergibt. Das innere Teil 2 weist eine Aufnahmekavität auf, in der der Vorformling 3 eingesetzt ist. Der Vorformling 3 weist einen Gewindeabschnitt 4 auf, der außerhalb der Aufnahmekavität angeordnet ist. Der Vorformling 3 weist an seiner Außenseite im Bodenabschnitt, d. h. an dem dem Gewindeabschnitt 4 entgegengesetzten Ende, einen Abschnitt 5 mit vergrößerter Wandstärke auf. Dies ist der Angussbereich, da beim Befüllen des Spritzgießwerkzeugs mit plastifizierter Schmelze die Schmelze über diesen Angussbereich geführt wird. Aufgrund der größeren Wanddicke des Vorformlings in diesem Bereich muss hier mehr Wärme aus dem Vorformling abgeführt werden. Daher weist die erste Ausführungsform ein Stützelement 6 auf, welches in den Figuren 2a und 2b im Detail gezeigt ist.

Figur 2a zeigt eine perspektivische Ansicht und Figur 2b eine Schnittansicht durch das Stützelement 6. Das Stützelement 6 ist im Wesentlichen scheibenförmig aufgebaut und weist eine erste Fläche 14, eine zweite Fläche (nicht gezeigt) und Umfangsflächen 15 auf, die die erste Fläche 14 und die zweite Fläche miteinander verbinden. In der ersten Fläche 14 ist die Stützfläche 12 angeordnet, die mit dem Angussbereich 5 des Vorformlings in Kontakt treten soll. Um eine Fluidzufuhr bzw. -abfuhr aus der Aufnahmekavität zu ermöglichen, weist das scheibenförmige Stützelement 6 sechs Durchgangsbohrungen 13 auf, durch die das Fluid zu- bzw. abgeführt werden kann.

Die Stützfläche 12 ist gegenüber der oberen Fläche 14 leicht zurückgesetzt, sodass sich zwischen Stützfläche 12 und oberer Fläche 14 ein kleiner Absatz ergibt. Grundsätzlich kann die Lochscheibe 6 auch um 180° gedreht verwendet werden, sodass die Seite der Lochscheibe 6, die keine abgesetzte Fläche hat, als Stützfläche dient, wie dies in Figur 1 zu sehen ist. Durch die Wendemöglichkeit der Lochscheibe 6 kann die Kühlhülse an Vorformlingen mit unterschiedliche dicken Angussbereichen angepasst werden.

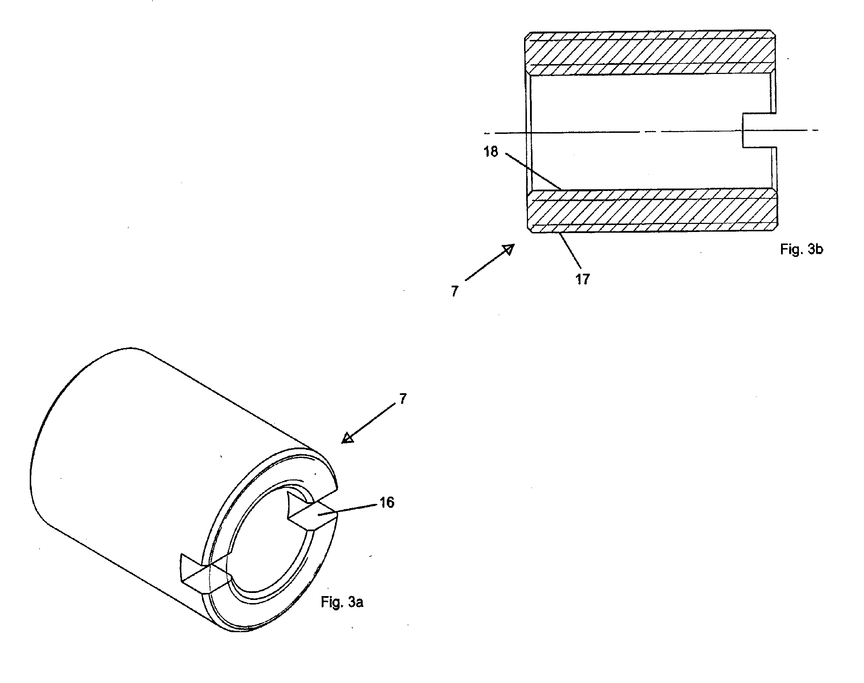

Wie in Figur 1 zu sehen ist, weist das innere Teil 2 an seinem geschlossenen Ende eine Stufenbohrung auf, die einen Abschnitt mit kleinerem Querschnitt und einen Abschnitt mit größerem Querschnitt hat. Der Abschnitt mit größerem Querschnitt hat einen Querschnitt, der im Wesentlichen dem Außendurchmesser des Stützelementes 6 entspricht. Um das Stützelement 6 innerhalb der Stufenbohrung zu halten, ist eine Gewindehülse 7 vorgesehen, die in den Figuren 3a und 3b im Detail gezeigt ist. Figur 3a zeigt eine perspektivische Ansicht der Gewindehülse 7 und 3b eine Schnittansicht. Die Gewindehülse 3a weist ein Außengewinde 17 und ein Innengewinde 18 auf. Zudem weist die Hülse 7 zwei Ausnehmungen 16 auf, die derart ausgebildet sind, dass mit Hilfe eines üblichen Schraubendrehers die Gewindehülse in den mit einem Innengewinde versehenen Abschnitt mit größerem Querschnitt des inneren Teils 2 eingeschraubt werden kann.

In der in Figur 1 dargestellten Position wird somit das Stützelement 6 durch die Gewindehülse 7 gehalten.

Um die Kühlhülse 1 an einer entsprechenden Aufnahmeplatte 9 zu befestigen, ist ein Hohlschraube 8 vorgesehen. Fluid, in der Regel Luft, kann über die Aufnahmeplatte 9 über die Hohlschraube 8, die Gewindehülse 7 sowie die Durchgangsöffnungen 13 des Stützelementes 6 in die Aufnahmekavität zu- bzw. aus dieser abgeführt werden.

Bei dieser Ausführungsform ist die Mündungsöffnung des Fluidkanals etwas größer als der Anguss, so dass sich zwischen Mündungsöffnung, Stützelement, Angussbereich und Vorformling ein kleiner Spalt ergibt. Dadurch wird verhindert, dass beim Ansaugen des Vorformlings sich Nasen an der Außenseite des Vorformlings bilden.

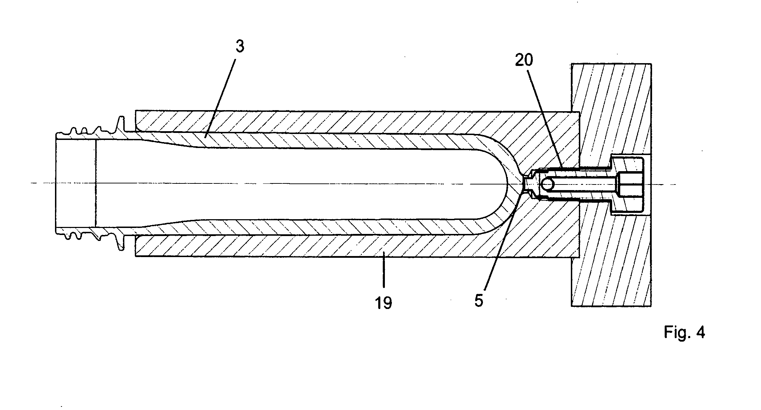

In Figur 4 ist eine Schnittansicht durch eine zweite Ausführungsform der Erfindung gezeigt. Gleiche Elemente sind mit den gleichen Bezugszeichen versehen worden. Das Stützelement im Bereich des Angussbereiches 5 ist hier jedoch mit Hilfe einer speziell ausgebildeten Schraube 20 verwirklicht.

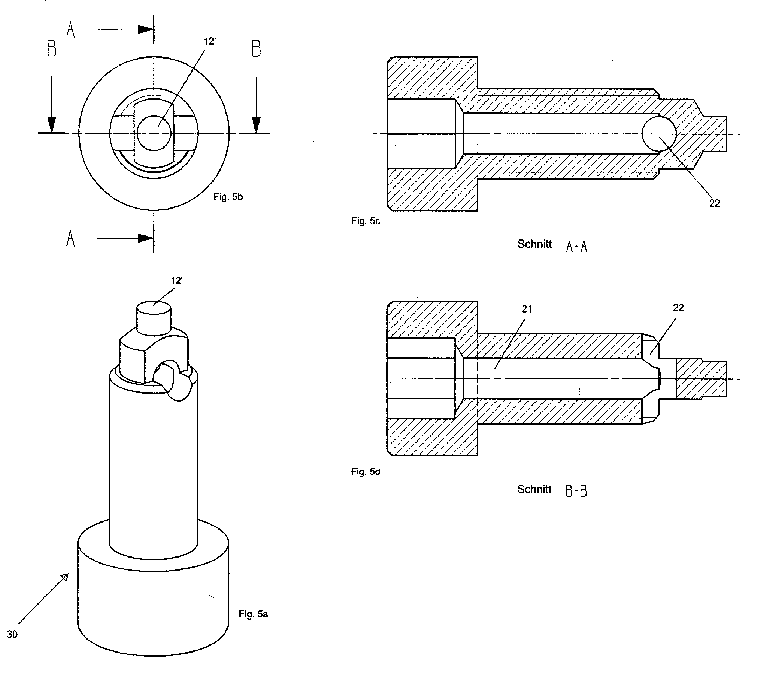

Der genaue Aufbau der Schraube 20 ergibt sich aus den Figuren 5a bis 5d. Figur 5a zeigt eine perspektivische Darstellung der Schraube, wobei der Schraubenkopf in der Zeichnung unten angeordnet ist und an der dem Schraubenkopf abgewandten Seite der Schraube das Stützelement 12' angeordnet ist. Figur 5b zeigt eine Draufsicht von oben auf die erfindungsgemäße Schraube. Die Figuren 5c und 5d zeigen zwei senkrecht zueinander angeordnete Längsschnitte entlang der Linien a-a bzw. b-b gemäß Figur 5b.

Die Schraube 6 ist als Hohlschraube ausgebildet, d. h. es gibt einen zentralen Durchgangskanal 21, der sich von dem Schraubenkopf in Richtung des Stützelementes 12' erstreckt. Allerdings wird dieser Kanal 21 nicht bis zur Spitze der Schraube 20 geführt, sondern wird über die quer zur Längsbohrung 21 eingebrachten Kanäle 22 nach außen verlängert, sodass das Kühlfluid über den Kanal 21 und den Kanal 22 das Stützelement 12' umströmen kann, sodass Fluid in die Aufnahmekavität zugeführt bzw. abgeführt werden kann, ohne dass die Berührung zwischen Vorformling 3 einerseits und Stützfläche 12' aufgegeben werden muss.

Bei dieser Ausführungsform ist die Stützfläche 12' kleiner als der Angussbereich 5, so dass zwischen Stützfläche, Angussbereich und Mündungsöffnung des Fluidkanals ein kleiner Spalt verbleibt, durch den das Fluid ab- oder zugeführt werden kann, ohne dass es zur Ausbildung von Nasen auf der Außenseite des Vorformlings kommt.

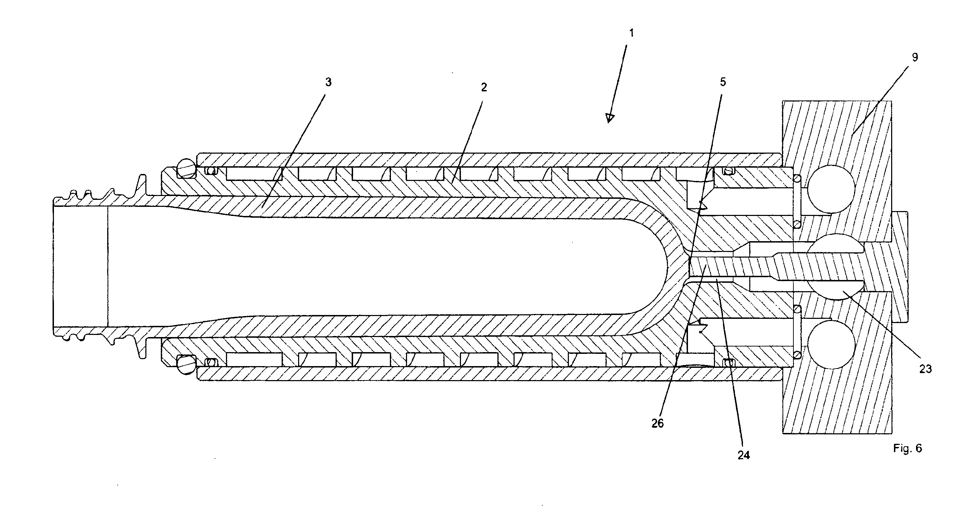

Figur 6 zeigt eine Schnittansicht einer dritten Ausführungsform der Erfindung. Das Stützelement 6 besteht hier aus einem im wesentlichen zentral innerhalb des Fluidkanals angeordneten Stempel. Die dem Vorformling 3 zugewandte Fläche des Stempels ist die Stützfläche, die hier etwas kleiner ausgebildet ist als der Angussbereich 5 des Vorformlings 3. Zudem ist die Öffnung des Fluidkanals etwas größer als der Angussbereich 5 ausgebildet, so dass sich zwischen dem Stützelement 6 einerseits und dem Fluidkanal andererseits ein ringförmiger Raum 24 ergibt. Zum Zubeziehungsweise Abführen des Fluids wird der Fluidkanal 23, der senkrecht zur Papierebene der Figur 6 verläuft, verwendet. Das zu- beziehungsweise abgeführte Fluid umströmt zunächst das Stützelement 6 und wird dann in Richtung der Längsachse durch den ringförmigen Raum 24 geleitet.

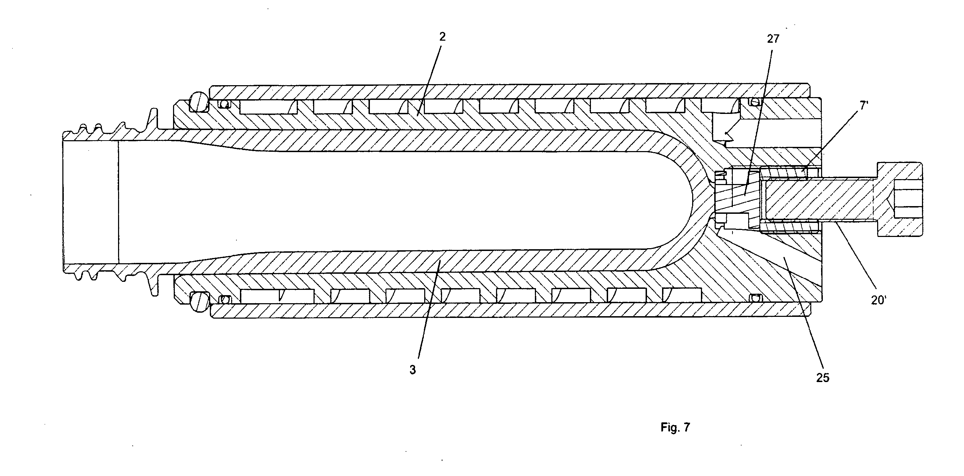

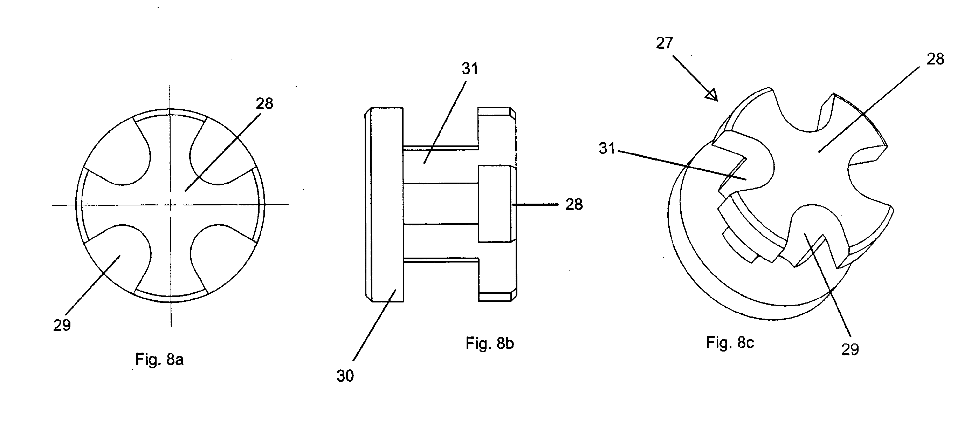

In den Figuren 7 und 8 ist eine vierte Ausführungsform der Erfindung gezeigt.

Hier wird das Fluid über den Fluidkanal 25 nicht zentral, sondern "schräg" zugeführt. Das Stützelement 27, das in den Figuren 8a bis 8c im Detail gezeigt ist, ist in der Art ausgebildet, dass es einen ringförmigen Raum für die Aufnahme des über den Kanal 25 zugeführten Fluids bildet, wobei der ringförmige Raum über vier Nuten 29 mit der Kanalöffnung zu der Aufnahmekavität verbunden ist.

Wie insbesondere in den Figuren 8a bis 8c zu entnehmen ist, besteht das Stützelement aus einer Endplatte 30, die eine Fluidverbindung gegenüber der Positionierungsbohrung, in der die Gewindehülse 7' und die Schraube 20' angeordnet sind, um das Stützelement 27 an seiner Position zu halten, verschließt.

Des Weiteren weist das Stützelement 27 eine scheibenförmige Fläche auf, die die Stützfläche 28 beinhaltet. In dieser Fläche sind vier Nuten 29 eingebracht, die eine Fluidverbindung zwischen dem Fluidkanal 25 und der Aufnahmekavität zur Verfügung stellen. Das scheibenförmige Element ist über entsprechende Verbindungsrippen 31 mit der Endplatte verbunden.

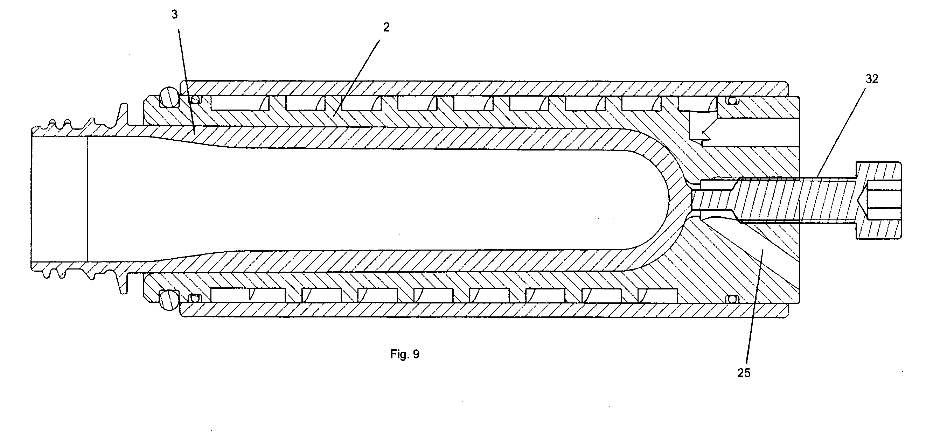

In den Figuren 9 bis 10 ist eine fünfte Ausführungsform der Erfindung gezeigt. Diese Ausführungsform ist der in Figur 6 gezeigten Ausführungsform sehr ähnlich, wobei hier jedoch die Fluidzuführung über den Fluidkanal 25 erfolgt.

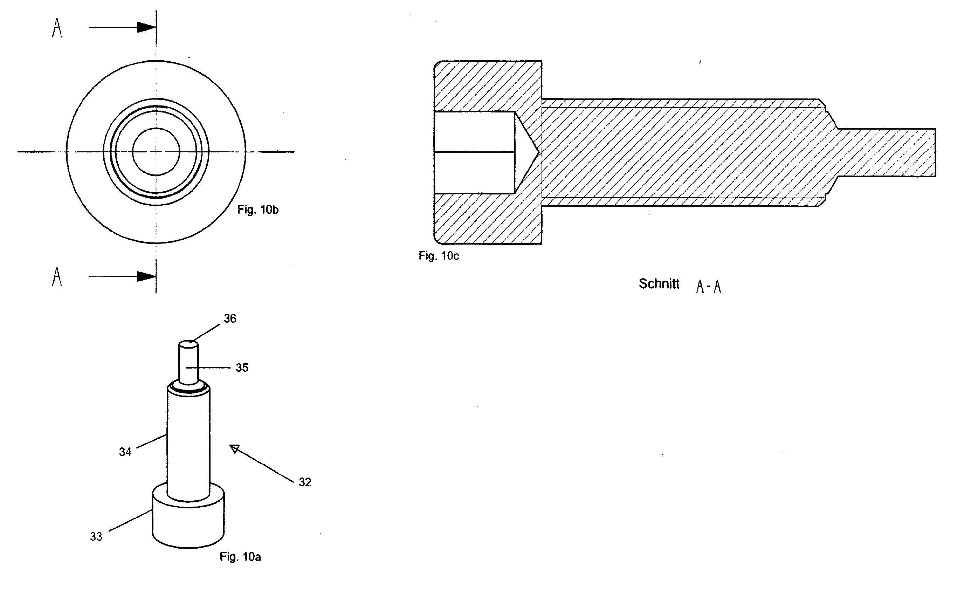

Das als Schraube 32 ausgebildete Stützelement ist in den Figuren 10a bis 10c im Detail gezeigt.

Figur 10a zeigt eine perspektivische Ansicht der Schraube. Figur 10b zeigt eine Ansicht von oben auf die Schraube und Figur 10c zeigt eine Schnittansicht entlang der Linie A-A in Figur 10b.

Die Schraube 32 besteht aus einem Schraubenkopf 33, der eine entsprechende Öffnung zur Betätigung der Schraube aufweist, und einem Gewindeabschnitt 34, der ein Außengewinde aufweist, und einen Stiftabschnitt 35, der die Stützfläche 36 aufweist. Wie insbesondere in Figur 9 zu erkennen ist, ist die Stützfläche 36 etwas kleiner als ihr Angussbereich 5 des Vorformlings 3. Auch hier wird über den Kanal 25 das Fluid in einen ringförmigen Raum eingebracht und von dort in die Aufnahmekavität weitergeleitet.

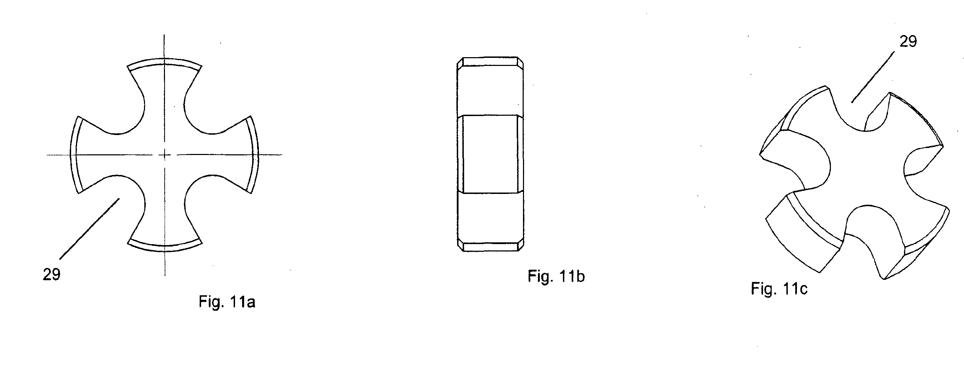

Schließlich ist in den Figuren 11a bis 11c ein alternatives Stützelement gezeigt. Dieses kann beispielsweise an Stelle des in Figur 2a bis 2c gezeigten Stützelements verwendet werden. Der Unterschied zwischen den Ausführungsformen besteht im wesentlichen darin, dass in der in den Figuren 11a bis 11c gezeigten Ausführungsformen keine Durchgangsbohrungen, sondern Nuten vorgesehen sind. Alle Ausführungsformen verwirklichen eine effektive Kühlung.

### Bezugszeichenliste

- 1: Kühlhülse
- 2: Innenteil
- 3: Vorformling
- 4: Gewindeabschnitt
- 5: Angussbereich
- 6: Stützelement
- 7, 7': Gewindehülse
- 8: Hohlschraube
- 9: Aufnahmeplatte
- 10: Kühlkanal
- 11: Äußerer Mantel
- 12: Stützfläche
- 12': Stützelement
- 13: Durchgangsöffnungen
- 14: Obere Fläche
- 15: Umfangsflächen
- 16: Ausnehmungen
- 17: Außengewinde
- 18: Innengewinde
- 19: Kühlhülse
- 20, 20': Schraube
- 21: Kanal
- 22: Kanal
- 23: Fluidkanal
- 24: ringförmiger Raum
- 25: Fluidkanal
- 26: Stempel
- 27: Stützelement
- 28: Stützfläche
- 29: Nuten
- 30: Endplatte
- 31: Verbindungsrippe
- 32: Schraube

## Patentansprüche

1. Kühlhülse (1) zur Aufnahme eines Vorformlings (3) mit einer Aufnahmekavität, welche eine Aufnahmeöffnung, über welche ein Vorformling (3) in die Aufnahmekavität eingesetzt werden kann, aufweist, und einem Fluidkanal (25), der derart angeordnet ist, dass ein Fluid bei verschlossener Aufnahmeöffnung über den Fluidkanal (25) in die Aufnahmekavität eingebracht oder aus der Aufnahmekavität entnommen werden kann, wobei die Kühlhülse (1) sich entlang einer Längsachse erstreckt und der Fluidkanal (25) eine Kanalöffnung aufweist, die auf oder in der Nähe der Längsachse angeordnet ist und der Aufnahmeöffnung gegenüber angeordnet ist, wobei im Fluidkanal (25) im Bereich der Kanalöffnung ein Stützelement (6, 12', 27) mit einer Stützfläche (12, 28) angeordnet ist, welche dafür vorgesehen ist, bei in die Kühlhülse (1) eingesetztem Vorformling (3) mit dessen Angussbereich in Kontakt zu treten, **dadurch gekennzeichnet, dass** das Stützelement (6, 12', 27) derart ausgebildet ist, dass, wenn die Stützfläche (6, 12', 27) in direktem Kontakt mit dem Vorformling (3) ist, das Fluid um das Stützelement (6, 12', 27) herum oder durch dieses hindurch strömen kann.

2. Kühlhülse nach Anspruch 1, **dadurch gekennzeichnet, dass** die Stützfläche (12, 28) einen zentralen Bereich und einen den zentralen Bereich umgebenden Ringbereich aufweist, wobei lediglich der Ringbereich mindestens eine Durchgangsöffnung, die mit dem Fluidkanal verbunden ist, aufweist.

3. Kühlhülse nach Anspruch 1 oder 2, **dadurch gekennzeichnet, dass** das Stützelement (6, 12', 27) im wesentlichen scheibenförmig mit einer ersten Fläche (14), die die Stützfläche (12, 28) aufweist, einer zweiten Fläche, die der ersten Fläche (14) gegenüber angeordnet ist, und einer Umfangsfläche (15), die die erste und die zweite Fläche miteinander verbindet, ausgebildet ist, wobei die Scheibe vorzugsweise mindestens eine außerzentrische Durchgangsöffnung (13), welche die erste und die zweite Fläche miteinander verbindet, und/oder mindestens eine in axialer Richtung in der Umfangsfläche verlaufende Nut (29) aufweist.

4. Kühlhülse nach einem der Ansprüche 1 bis 3, **dadurch gekennzeichnet, dass** das Stützelement (6, 12', 27) ein Umlenkelement für das Fluid aufweist, welches derart ausgebildet ist, dass Fluid, welches an der der Stützfläche (12, 28) abgewandten Seite im wesentlichen entlang der Längsachse auf das Umlenkelement strömt, radial nach außen um die Stützfläche herum geleitet wird.

5. Kühlhülse nach einem der Ansprüche 1 bis 4, **dadurch gekennzeichnet, dass** die Längsachse durch die Stützfläche (12, 28) verläuft.

6. Kühlhülse nach einem der Ansprüche 1 bis 5, **dadurch gekennzeichnet, dass** der Fluidkanal gestuft ausgebildet ist, mit einem Abschnitt mit größerem Querschnitt und einem Abschnitt mit kleinerem Querschnitt, wobei der Abschnitt mit kleinerem Querschnitt in die Aufnahmekavität mündet und das Stützelement (6, 12', 27) in dem Abschnitt mit größerem Querschnitt angeordnet ist.

7. Kühlhülse nach Anspruch 6, **dadurch gekennzeichnet, dass** der Abschnitt mit größerem Querschnitt ein Innengewinde aufweist und eine Gewindehülse mit Außengewinde vorgesehen ist, die in den Abschnitt mit größerem Querschnitt eingeschraubt werden kann, so dass das Stützelement (6, 12', 27) zwischen dem Abschnitt mit kleinerem Querschnitt und der Gewindehülse angeordnet ist.

8. Kühlhülse nach einem der Ansprüche 1 bis 7, **dadurch gekennzeichnet, dass** das Stützelement (6, 12', 27) zwischen einer Stützposition, in der das Stützelement (6, 12', 27) in der Kanalöffnung angeordnet ist, und einer Auswurfposition, in der das Stützelement (6, 12', 27) zumindest teilweise innerhalb der Aufnahmekavität angeordnet ist, hin und her bewegbar ist.

9. Kühlhülse nach einem der Ansprüche 1 bis 8, **dadurch gekennzeichnet, dass** das Stützelement mit Hilfe eines elastischen Elements in Richtung der Aufnahmekavität vorgespannt ist.

10. System mit einem Spritzgießwerkzeug zur Herstellung von Vorformlingen mit mindestens einem Kern und mindestens einer Kavität, wobei das Werkzeug eine geschlossene Position, in der der Kern in der Kavität angeordnet ist, und eine offene Position, in der der Kern außerhalb der Kavität angeordnet ist, aufweist, wobei in der geschlossenen Position zwischen dem Kern einerseits und der Kavität andererseits ein Formraum gebildet wird, dessen Innenkontur der äußeren Form des herzustellenden Vorformling entspricht, wobei ein Angusskanal mit einer Mündungsöffnung in den Formraum vorgesehen ist, über den plastifizierte Schmelze in den Formraum zugeführt werden kann, **dadurch gekennzeichnet, dass** das System eine Kühlhülse (1) nach einem der Ansprüche 1 bis 9 zur Aufnahme eines hergestellten Vorformlings aufweist.

11. System nach Anspruch 10, **dadurch gekennzeichnet, dass** die Kanalöffnung des Fluidkanals der Kühlhülse (1) größer als die Mündungsöffnung des Angusskanals ist.

12. System nach Anspruch 10 oder 11, **dadurch gekennzeichnet, dass** die Stützfläche (12, 28) des Stützelementes (6, 12', 27) der Kühlhülse (1) kleiner ist als die Mündungsöffnung des Angusskanals.

## Claims

1. A cooling sleeve (1) for receiving a preform (3) comprising a receiving cavity having a receiving opening by way of which a preform (3) can be inserted into the receiving cavity, and a fluid passage (25) which is so arranged that when the receiving opening is closed a fluid can be introduced into the receiving cavity or removed from the receiving cavity by way of the fluid passage (25), wherein the cooling sleeve (1) extends along a longitudinal axis and the fluid passage (25) has a passage opening which is arranged on or in the proximity of the longitudinal axis and which is arranged opposite the receiving opening, wherein arranged in the fluid passage (25) in the region of the passage opening is a support element (6, 12', 27) having a support surface (12, 28) which is provided for coming into contact with the sprue part when the preform (3) is inserted into the cooling sleeve (1), **characterized in that** the support element (6, 12', 27) is of such a configuration that when the support surface (6, 12', 27) is in direct contact with the preform (3), the fluid can flow around or through the support element (6, 12', 27).

2. A cooling sleeve as set forth in claim 1 **characterized in that** the support surface (12, 28) has a central region and an annular region surrounding the central region, wherein only the annular region has at least one through opening connected to the fluid passage.

3. A cooling sleeve as set forth in claim 1 or claim 2 **characterized in that** the support element (6, 12', 27) is substantially disk-shaped having a first surface (14) which has the support surface (12, 28), a second surface which is arranged opposite the first surface (14), and a peripheral surface (15) connecting the first and second surfaces together, wherein the disk has preferably at least one eccentric through opening (13) which connects the first and second surfaces together and/or at least one groove (29) extending in the axial direction in the peripheral surface.

4. A cooling sleeve as set forth in one of claims 1 through 3 **characterized in that** the support element (6, 12', 27) has a deflection element for the fluid, which is of such a configuration that fluid which flows at the side remote from the support surface (12, 28) substantially along the longitudinal axis onto the deflection element is guided radially outwardly around the support surface.

5. A cooling sleeve as set forth in one of claims 1 through 4 **characterized in that** the longitudinal axis extends through the support surface (12, 28).

6. A cooling sleeve as set forth in one of claims 1 through 5 **characterized in that** the fluid passage is of a stepped configuration, having a portion of larger cross-section and a portion of smaller cross-section, wherein the portion of smaller cross-section opens into the receiving cavity and the support element (6, 12', 27) is arranged in the portion of larger cross-section.

7. A cooling sleeve as set forth in claim 6 **characterized in that** the portion of larger cross-section has a female screwthread and there is provided a threaded sleeve having a male screwthread, which can be screwed into the portion of larger cross-section so that the support element (6, 12', 27) is arranged between the portion of smaller cross-section and the threaded sleeve.

8. A cooling sleeve as set forth in one of claims 1 through 7 **characterized in that** the support element (6, 12', 27) is reciprocatable between a support position in which the support element (6, 12', 27) is arranged in the passage opening and an ejection position in which the support element (6, 12', 27) is arranged at least in part within the receiving cavity.

9. A cooling sleeve as set forth in one of claims 1 through 8 **characterized in that** the support element (6, 12', 27) is prestressed in the direction of the receiving cavity by means of an elastic element.

10. System with an injection molding tool for the production of preforms having at least one core and at least one cavity, wherein the tool has a closed position in which the core is arranged in the cavity and an open position in which the core is arranged outside the cavity, wherein a mold space is formed in the closed position between the core on the one hand and the cavity on the other hand, the internal contour of the mold space corresponding to the external shape of the preform to be produced, wherein there is provided a sprue passage having a mouth opening into the mold space, by way of which plasticised molten material can be fed into the mold space, **characterized in that** the system comprises a cooling sleeve (1) as set forth in one of claims 1 through 9 for receiving a produced preform.

11. System as set forth in claim 10 **characterized in that** the passage opening of the fluid passage of the cooling sleeve (1) is larger than the mouth opening of the sprue passage.

12. System as set forth in claim 10 or claim 11 **characterized in that** the support surface (12, 28) of the support element (6, 12', 27) of the cooling sleeve (1) is smaller than the mouth opening of the sprue passage.

## Revendications

1. Douille de refroidissement (1) pour la réception d'une préforme (3) avec une cavité de réception qui présente une ouverture de réception, par laquelle une préforme (3) peut être insérée dans la cavité de réception, et un canal fluidique (25) qui est disposé de telle manière qu'un fluide puisse être introduit en cas d'ouverture de réception fermée par le canal fluidique (25) dans la cavité de réception ou puisse être retiré de la cavité de réception, la douille de refroidissement (1) s'étendant le long d'un axe longitudinal et le canal fluidique (25) présentant une ouverture de canal qui est disposée sur ou à proximité de l'axe longitudinal et est disposée en regard de l'ouverture de réception, dans le canal fluidique (25) dans la zone de l'ouverture de canal étant disposé un élément d'appui (6, 12', 27) avec une surface d'appui (12, 28) qui est prévue afin d'entrer en contact avec sa zone d'entrée lorsque la préforme (3) est insérée dans la douille de refroidissement (1), **caractérisée en ce que** l'élément d'appui (6, 12', 27) est réalisé de telle manière que lorsque la surface d'appui (6, 12', 27) est en contact direct avec la préforme (3), le fluide puisse s'écouler autour de l'élément d'appui (6, 12', 27) ou au travers de celui-ci.

2. Douille de refroidissement selon la revendication 1, **caractérisée en ce que** la surface d'appui (12, 28) présente une zone centrale et une zone annulaire entourant la zone centrale, seule la zone annulaire présentant au moins une ouverture de passage qui est reliée au canal fluidique.

3. Douille de refroidissement selon la revendication 1 ou 2, **caractérisée en ce que** l'élément d'appui (6, 12', 27) est réalisé sensiblement en forme de disque avec une première surface (14) qui présente la surface d'appui (12, 28), une seconde surface qui est disposée en regard de la première surface (14), et une surface périphérique (15) qui relie entre elles la première et la seconde surfaces, le disque présentant de préférence au moins une ouverture de passage (13) excentrée qui relie entre elles la première et la seconde surfaces et/ou présente au moins une rainure (29) s'étendant dans le sens axial dans la surface périphérique.

4. Douille de refroidissement selon l'une quelconque des revendications 1 à 3, **caractérisée en ce que** l'élément d'appui (6, 12', 27) présente un élément de déviation pour le fluide qui est réalisé de telle manière que du fluide qui s'écoule sur le côté éloigné de la surface d'appui (12, 28) sensiblement le long de l'axe longitudinal vers l'élément de déviation, soit conduit radialement vers l'extérieur autour de la surface d'appui.

5. Douille de refroidissement selon l'une quelconque des revendications 1 à 4, **caractérisée en ce que** l'axe longitudinal s'étend au travers de la surface d'appui (12, 28).

6. Douille de refroidissement selon l'une quelconque des revendications 1 à 5, **caractérisée en ce que** le canal fluidique est réalisé étagé avec un tronçon de grande section transversale et un tronçon de petite section transversale, le tronçon de petite section transversale débouchant dans la cavité de réception et l'élément d'appui (6, 12', 27) étant disposé dans le tronçon de grande section transversale.

7. Douille de refroidissement selon la revendication 6, **caractérisée en ce que** le tronçon de grande section transversale présente un filet intérieur et une douille filetée avec un filet extérieur est prévue, laquelle peut être vissée dans le tronçon de grande section transversale de sorte que l'élément d'appui (6, 12', 27) soit disposé entre le tronçon de petite section transversale et la douille filetée.

8. Douille de refroidissement selon l'une quelconque des revendications 1 à 7, **caractérisée en ce que** l'élément d'appui (6, 12', 27) peut être alternativement déplacé entre une position d'appui, dans laquelle l'élément d'appui (6, 12', 27) est disposé dans l'ouverture de canal, et une position d'éjection, dans laquelle l'élément d'appui (6, 12', 27) est disposé au moins en partie dans la cavité de réception.

9. Douille de refroidissement selon l'une quelconque des revendications 1 à 8, **caractérisée en ce que** l'élément d'appui est précontraint à l'aide d'un élément élastique en direction de la cavité de réception.

10. Système avec un outil de moulage par injection pour la fabrication de préformes avec au moins un noyau et au moins une cavité, l'outil présentant une position fermée, dans laquelle le noyau est disposé dans la cavité, et une position ouverte, dans laquelle le noyau est disposé hors de la cavité, dans la position fermée étant formé entre le noyau d'une part et la cavité d'autre part un espace de formage, dont le contour intérieur correspond à la forme extérieure de la préforme à fabriquer, un canal d'entrée avec une ouverture d'embouchure étant prévu dans l'espace de formage, par lequel de la fonte plastifiée peut être amenée dans l'espace de formage, **caractérisé en ce que** le système présente une douille de refroidissement (1) selon l'une quelconque des revendications 1 à 9 pour la réception d'une préforme fabriquée.

11. Système selon la revendication 10, **caractérisé en ce que** l'ouverture de canal fluidique de la douille de refroidissement (1) est supérieure à l'ouverture d'embouchure du canal d'entrée.

12. Système selon la revendication 10 ou 11, **caractérisé en ce que** la surface d'appui (12, 28) de l'élément d'appui (6, 12', 27) de la douille de refroidissement (1) est inférieure à l'ouverture d'embouchure du canal d'entrée.
